Europäisches Patentamt

European Patent Office

Office européen des brevets

(11) Publication number: **0 097 256 B1**

# EUROPEAN PATENT SPECIFICATION

(45) Date of publication of patent specification: **25.01.89**

(51) Int. Cl.⁴: **G 06 F 12/00, G 06 F 9/46**

(21) Application number: **83105168.5**

(22) Date of filing: **25.05.83**

(54) Method and apparatus for managing a buffer pool referenced by batch and interactive process.

(30) Priority: **24.06.82 US 391629**
**21.06.82 US 390163**
**21.06.82 US 390454**
**21.06.82 US 390485**

(43) Date of publication of application:
**04.01.84 Bulletin 84/01**

(45) Publication of the grant of the patent:
**25.01.89 Bulletin 89/04**

(84) Designated Contracting States:
**DE FR GB IT**

(56) References cited:
**RESEARCH REPORT RJ-3354, 29th December
1981, pages 1-13, IBM Research Laboratory,
San Jose, California, US; G.M. SACCO et al.: "A
mechanism for managing the buffer pool in a
relational database system using the hot set
model"**

**IBM TECHNICAL DISCLOSURE BULLETIN, vol.
24, no. 1A, June 1981, pages 333-335, New
York, US; C.M. MAY: "Management technique
for memory hierarchies"**

(73) Proprietor: **International Business Machines
Corporation
Old Orchard Road
Armonk, N.Y. 10504 (US)**

(72) Inventor: **Gumaer, Robert Arthur
2204 Flint Av.
San Jose California 95148 (US)**
Inventor: **Mortenson, John Altert
215 Alexander Av.
Los Gatos California 95030 (US)**

(74) Representative: **Ahlman, Bertel et al
IBM Svenska AB Intellectual Property
Department
S-163 92 Stockholm (SE)**

(56) References cited:
**IBM TECHNICAL DISCLOSURE BULLETIN, vol.
24, no. 7B, December 1981, pages 3620-3625,
New York, US; R.W. COLLINS et al.: "Storage
pools for segmented systems"**

**IBM TECHNICAL DISCLOSURE BULLETIN, vol.
17, no. 3, August 1974, pages 665-667, New
York, US; A.J. BOWEN: "Job-oriented page
replacement"**

Courier Press, Leamington Spa, England.

# EP 0 097 256 B1

**Description**

This invention relates to an apparatus and method for operating a computing apparatus including a buffer pool. More specifically, it relates to a data base system providing for management of a buffer pool referenced by both batch and interactive processes.

Data base systems which are designed for transaction processing usually have buffer managers which are optimized for random access patterns of buffer usage. Normally, a pool of buffers is managed on a least recently used (LRU) basis, which keeps the data block in the most recently used buffer available for subsequent access by the application which is significantly more likely than access to data blocks in the least recently used buffer. This poses a performance problem for many utilities and some applications which access data is a very sequential manner. An example of such use is a utility for taking a backup copy of a data base: most blocks are retrieved in sequential order. It is desirable, when managing a buffer pool for sequential processes, to provide for data block prefetching by anticipating the need for new blocks from storage and read those into a free buffer. Such is performed by the QSAM buffering technique desribed in IBM OS/VS2 SAM Logic, Release 3.8, SY26—3832—1, 2nd Edition, QSAM Routines, pp. 15—53, 178—181.

Such prefetching results in a significant problem where pages of data sets assigned to a least recently used (LRU) managed buffer pool are subjected to concurrent random and sequential access patterns. Generally, the demand for sequential access to new pages occurs at a much higher rate than the demand for random access to new pages, particularly when the former entails prefetch. Consequently, the length of time during which a random page can be re-accessed in a buffer without having to be reread from external storage may be reduced to the point where it is inadequate to support the transactions peforming random access. This occurs because the rate of movement of a buffer through the LRU chain is a function of buffer reassignment demand rate. A higher demand rate leads to faster movement to the head of the LRU queue, thus shortening the length of time the buffer's old content is available for reacess.

Buffer monopolization by sequential processes is prevented by allocating to user (i.e., random or sequential process) a buffer last used by the same user in the IBM IMS/VS Version 1.2 ISAM/OSAM Buffer Handler (source code modules DFSDBH10, DFSDBH20, DFSDBH30 and DFSDBH40—see, in particular, the PSTLR column in the characteristics table in DFSDBH20). However, the ISAM/OSAM Buffer Handler does not provide prefetch capability to enhance the performance of sequential processes.

Thus, in the prior art, buffer pools are either dedicated to batch (sequential) or random processes, or if shared, the batch processes tend to monopolise the pool, requiring unnecessary input/output operations when a random process reaccesses a data set page. Consequently, particularly in data base systems where concurrency exists between random and sequential access to data set pages assigned to a buffer pool, there exists a need for a buffer handler which will manage an LRU buffer pool for both sequential and random processes, yet will prevent unnecessary input/output (I/O) operations for random processes resulting from monopolization of the buffer pool by sequential processes, and at the same time provide such sequential processes with an asynchronous prefetch capability with minimal impact on the performance of random processes.

The invention as claimed in claim 1 provides a new method for operating a computing apparatus including a main processor, a plurality of main storage buffers, and at least one external storage device. The main processor is operated under control of a data base system which includes a buffer manager for allocating data set pages read from the storage device into the buffers for concurrent access by both sequential and random processes. The new method is characterized by the steps of (1) establishing a queue value; (2) maintaining a normal least recently used (LRU) buffer chain and a sequential LRU buffer chain with the sequential LRU buffer chain replicated on the normal LRU buffer chain; (3) placing buffers released from a sequential process that is not a prefetch process in both LRU buffer chains, and placing buffers released from a random process or from a sequential prefetch process only in the normal LRU buffer chain; and (4) responsive to a request for a buffer for a sequential process, stealing the head buffer from the sequential LRU buffer chain provided the number of buffers in that chain exceeds the queue value, otherwise stealing the head buffer from the normal LRU chain, thereby preventing recursive steals of buffers employed in nested sequential processes.

The new method may be futher characterized by the step of (5) conditionally asynchronously prefetching data set pages from the external storage device in response to a request for a data set page which is an integral multiple of a process defined prefetch quantity.

The invention as claimed in claim 7 further provides a computing apparatus including a main processor, a plurality of main storage buffers and at least one external storage device. The main processor is operated under control of a data base system which includes a buffer manager for allocating data set pages read from the storage device into the buffers for concurrent access by both sequential and random processes. The computing apparatus is characterized by means for operating the processor to (1) establish a queue value; (2) maintain a normal least recently used (LRU) buffer chain and a sequential LRU buffer chain with the sequential LRU buffer chain replicated on the normal LRU buffer chain; (3) place buffers released from a sequential process that it not a prefetch process in both LRU buffer chains, and place buffers released from a random process or from a sequential prefetch process only in the normal LRU buffer chain; and (4) responsive to a request for a buffer for a sequential process, steal the head buffer from the sequential LRU buffer chain provided the number of buffers in that chain exceeds the queue value,

2

otherwise steal the head buffer from the normal LRU chain, thereby preventing recursive steals of buffers employed in nested sequential processes.

The new apparatus may be further characterized by means for conditionally asynchronously prefetching data set pages from the external storage device in response to a request for a data set page which is an integral multiple of a process defined prefetch quantity.

Figure 1 is a diagram of a computing apparatus illustrating the environment of the invention.

Figure 2 is a diagram illustrating the normal and sequential LRU chains of the invention.

Figure 3 is a diagram illustrating a window block.

Figure 4 is a state diagram illustrating the buffer states and state changes characterizing the buffer pool of Figure 1.

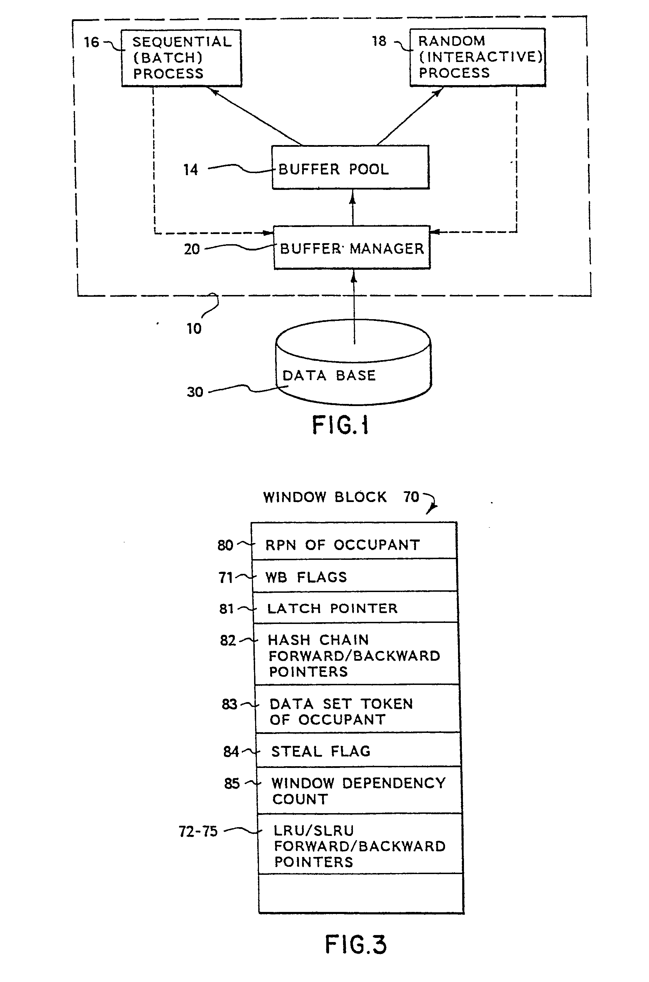

Referring to Figure 1, a description will be given of the computing apparatus of the invention. Computer 10 may be, for example, an IBM System/370, the architecture of which is described in IBM System/370 Principles of Operation, IBM Publication Ga22—7000—6, operating under control of an operating system, usch as the IBM OS/MVS operating system. Operating under control of the operating system is a data base control system which includes buffer manager 20. Buffer pool 14 is provided within the virtual storage of processor 10, controlled by buffer manager 20, and accessed at sequential processes 16 and random processes 18. Under the control of buffer manager 20, data set pages required by processes 16, 18 are read into buffer pool 14 from data base 30 on external storage.

In accordance with this invention, buffer manager 20 provides support to enhance the performance of sequential processing of data with minimal impact to the performance of random processing. Thus, buffer manager 20 inludes the control logic to minimize buffer pool monopolization by sequential process in environments where concurrency exists between access to data set pages assigned to buffer pool 14 by sequential processes 16 and random processes 18, and to provide asynchronous prefetch whereby data set pages residing on external storage 30 are brought into buffer pool 14 in anticipation of their access by sequential processes 16, for example. Data set pages may reside in buffer pool 14 and/or in external data base 30. The control logic of buffer manager 20 is based upon the assumption that the probability of reaccess to pages accessed by random processes 18 is much greater than that of reaccess to pages accessed by sequential processes 16.

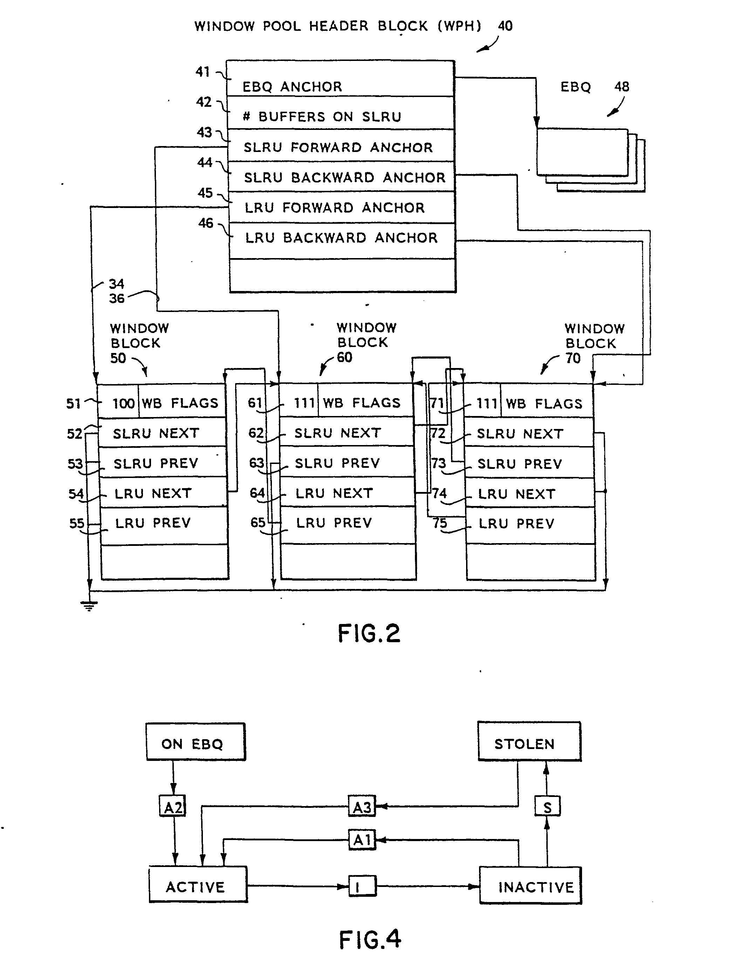

Referring to Figure 2, buffer manager 20 maintains within buffer pool 14 two least recently used buffer chains: a normal (LRU) buffer chain 34 and a sequential (SLRU) buffer chain 36. The organization of buffers within the LRU and SLRU chains in buffer pool 14 will be described. A buffer control block set, created for each buffer pool 14 initialized by buffer manager 20, comprises one window pool header block 40 and a plurality of window blocks WB 50, 60, 70 . . ., with one window block WB for each buffer within buffer pool 14. The buffer control block of Figure 2 resides within the virtual address space of processor 10. Window pool header block 40 includes excess block queue EBQ anchor field 41, containing a pointer to the first window block in queue 48 of excess window blocks; count field 42, which stores the count of the number of buffers on the SLRU chain; SLRU forward achor field 43, which points to the head window block WB 60 in the SLRU chain; SLRU backward anchor field 44, which points to the tail window block WB 70 in the SLRU chain; LRU forward anchor field 45 which points to window block WB 50 at the head of the LRU chain; and LRU backward anchor 46, which points to window block 70 at the tail of the LRU chain.

Each window block 50, 60, 70 includes a WB flag field 51, 61, 71, respectively comprising three flag bits having the following significance (from left to right): bit 1 is set on (= 1) if the window block is on the LRU chain: bit 2 is set on if the window block is on the SLRU chain; and bit 3 is set on if the window block was last used for sequential processing. Thus, WB flag field 51 value of 100 indicates that WB 50 is on the LRU chain, is not on the SLRU chain, and was not last used for sequential processing (as opposed to random processing). In the example of Figure 2, window block 50, 60 and 70 are on the LRU chain and window blocks 60 and 70 are on the SLRU chain. Queue of excess window blocks 48 is normally empty once steady state usage of buffers in pool 14 has been reached. Window blocks 50, 60, 70 each also include four chain pointer fields, including: SLRU next pointer, SLRU previous pointer, LRU next pointer, and LRU previous pointer — each used in forward and reverse chaining the window blocks within LRU and SLRU chains. Fields 52, 53, 55, 63, 72 and 74 are set to null, whereas the other pointer fields contain values corresponding to the arrows in Figure 2.

Referring to Figure 3, a description will be given of additional fields and uses of window block 70. Relative page number (RPN) field 80 gives the relative page numer of the page occupying the buffer block corresponding to this window block. Latch pointer field 81 is used to serialize the hash chain search (also referred to as the look aside search) described below. Hash chain forward and backward pointers 82 are used to connect or link window blocks 70 . . . that hash to the same value, with each hash chain anchored to a field (not shown) in the window pool header block 40. Data set token of occupant field 83 is a field identifying, usch as by key, the data set of the page presently occupying the buffer associated with this window block 70. Steal flag 84 is used to prevent multiple users from stealing the same buffer, and window dependency count field 85 gets incremented and decremented as users get and release the page within the buffer associated with this window block, as will be described more fully hereafter.

When a user 16, 18 requests a page from buffer manager 20, the request includes the data set token and the relative page number (RPN) of the required page. This value is hashed into a hash value, and a search made of all window blocks 70 . . . linked by hash chain pointers 82 as having the same hash value.

This is referred to as the look-aside search. The search is successful if a window block is found having a data set token field 83 and an RPN field 80 matching the request.

Referring once again to Figure 2, buffers released from sequential processing are replaced on the tail of the SLRU chain and on the tail of th LRU chain, while buffers released from random processing are placed only on the tail of the normal LRU chain. Buffers required to satisfy sequential access requests are obtained from the head of the SLRU chain if the number of buffers residing on SLRU is greater than a sequential steal threshold value Q. Otherwise, if the number of buffers on SLRU is not greater than Q or if the request is for access by random process, the buffer is obtained from the head of the normal LRU chain. This logic gives buffers recently used for sequential access a higher steal priority for new sequential requests than buffers last used for random access without altering buffer steal priority for new random requests, thus minimizing the monopolization effect of sequential processing.

The sequential steal threshold value Q is employed to minimize refetch activity in those cases where sequential processes must occasionally perform nested sequential access to out-of-line sequences of pages. An example of this is a reorganization utility 16 following a logical record sequence that is basically clustered but has occasional out-of-line (non-clustered) inserts. The buffers last referenced in main line sequences will tend not to be stolen to satisfy out-of-line sequence access requests since SLRU will not be used unless SLRU contains sufficient buffers less recently used than just released main line LRU sequence buffers. A reasonable value for Q may be established as the product of the number of levels of out-of-line nesting most often expected per sequential processing instance times the maximum number of concurrent sequential processing instances most often expected. A value of $Q = 4$ may be a reasonable value for example.

In cases where sequential processing is being performed against data base data, certain performance advantages can be realized if the data is asynchronously prefetched from external storage 30, such as a direct access storage device (DASD), to virtual storage buffers 14 prior to its actual use. These advantages are decreased I/O path length overhead due to I/O batching and decreased total elapsed time due to overlapped I/O. Prefetch occurs asynchronously as a side function of the buffer manager 20 page access function. Prefetch is accomplished by scheduling an asynchronous execution unit that acquires necessary buffers from buffer pool 14, loads them with the required data base pages, and then releases them to LRU status. As many of the required buffers as possible are acquired to prefetch from SLRU, but when buffers are released by prefetch, they are placed only on the LRU chain, and not on the SLRU. This is done to minimize refetch of not yet accessed prefetch buffers in cases where nested sequential access to out-of-line sequences of pages is required. The prefetched buffers are, however, placed on SLRU upon release after individual access by, say, some sequential process 16. Access to buffers containing prefetched data is effected through the normal page access procedures. In this example, the number of consecutive pages prefetched is a power of 2 value less than 64. This value is provided by callers 16, 18 that desire the prefetch function.

Prefetch will then be scheduled, by buffer manager 20 page access function, only when all of the following conditions are met:

1. The caller indicates sequential processing for the currently requested page.

2. A prefetch number of pages value is specified.

3. The currently requested page number (relative to the first page of the data set) is evenly divisible by the prefetch number of pages value. This is done to avoid the tracking necessary to prevent multiple prefetches from being initialized for the same pages by the same sequential process.

4. The buffer pool 14 contains sufficient reassignable buffers so that usage of some buffers for prefetch will not totally deplete the pool's supply of re-assignable buffers.

5. Prefetch will not occur outside the current physical data set bounds.

Prefetch starts at the current page numer +1. The last page prefetched is the next sequential data set page whose page numer is evenly divisible by the prefetch number of pages value. Thus, once a prefetch sequence has been initialized, all subsequent pages will have been prefetched prior to access as long as the sequence remains unbroken.

Referring now to Figure 4, a description will be given of buffer states and state changes. The flow states shown are (1) ON EBQ, (2) ACTIVE, (2) INACTIVE, and (4) STOLEN. A buffer in state ON EBQ is represented by a window block 48 on the queue of excess window blocks, and is available for immediate use as it is not currently assigned to any data page. A buffer in state ACTIVE is in use by one or more data base processors 16, 18 and is locatable through a look-aside queue structure established by hash chain forward/backward pointers 82 and their anchors in WPH 40. A buffer in INACTIVE state is not in use by any data base processor 16, 18, but is findable through the look-aside queue structure. A buffer in state STOLEN is removed from the look-aside queue structure in preparation for reassignmeht to a different data base page for an incoming request.

Five state changes are illustrated in Figure 4, including state changes A1, A2, S, A3 and I. State change A1 represents a buffer going from INACTIVE to ACTIVE state, and occurs when an INACTIVE buffer has been located through the look-aside queue structure containing a requested page. State change A2 represents a buffer going from EBQ 48 to an ACTIVE state, and occurs when a buffer is needed to satisfy an incoming request for a page which could not be located on the look-aside queue structure, and at least one buffer exists in EBQ 48. The buffer is inserted into the look-aside queue structure. State change S representes a buffer going from INACTIVE to STOLEN state. In this situation, the INACTIVE buffer has migrated to the head of the LRU or SLRU chain prior to an occurrence of state change A1, and is now being removed from the LRU/SLRU chains and the look-aside queue structure in order to satisfy an incoming request for a page which could not be located by way of the look-aside queue structure. Also, the incoming request for a page could not be satisfied by a state change A2, as there were no buffers in EBQ 48. State change A3 represents a buffer going from STOLEN to ACTIVE state. The just stolen buffer (state change S) is made active and placed into the look-aside queue structure. State change I represents a buffer going from ACTIVE to INACTIVE state. The count of buffer users has just been reduced to zero; consequently, the buffer is deleted from its current position (if any) within the LRU/SLRU chains and placed at the tail of the LRU chain and, possibly, at the tail of the SLRU chain.

Referring now to the tables, the procedures implementing the method and characterizing the apparatus of the invention will be set forth in psuedo-code. As will be apparent to those skilled in the art, the code representation of these procedures may readily be converted to executable code without undue experimentation.

```
           TABLE 1     BUFFER POOL MANAGER SCENARIO

        0090 'Subsystem Initialization'
        0100  Start up
        0110  DO until all buffers initialized for this pool
        0120     Initialize window block WB
        0130     Insert WB into EBQ
        0140  End;
                .
                .
                .
        0145 'User requests a single page without prefetch'
        0150  Call GET_PAGE
                .
                .
                .
        0160 'User releases page last requested'
        0170  Call RELEASE_PAGE
                .
                .
                .
        0180 'User request page with prefetch'
        0190  Call GET_PAGE
                .
                .
                .
        0200 'User releases page last requested
        0210  Call RELEASE_PAGE
                .
                .
                .
        0220 'User requests a previously prefetched page'
        0230  Call GET_PAGE
                .
                .
                .
        0240 'User releases page last requested'
        0250  Call RELEASE_PAGE
```

TABLE 2   GET_PAGE

```
GET_PAGE:
  Search buffer pool for page N
  IF page N not found THEN
    DO
      Attempt to acquire buffer from EBQ
      IF not successful THEN
        Call STEAL_BUFFER
      ELSE;
    END
  ELSE
    Increment dependency count
  Call INDICATE_STATUS
  IF PREFETCH_DRIVER called GET_PAGE THEN
    DO
      Save buffer address in list
      IF range completed
        Return to PREFETCH_DRIVER
      ELSE
        DO
          Set up for next page in range (N=next page)
          GO TO GET_PAGE (line 0300)
        END
    END
  ELSE
    DO
      Read page N into buffer if required
      IF sequential request
       AND a prefetch quantity is specified
       AND requested page number module prefetch
        quantity = 0
       AND a prefetch execution unit is available or
        creatable
       THEN (prefetch conditions are met)
        Asynchronously schedule PREFETCH_DRIVER
      ELSE;
      Return
    END;
  END (GET_PAGE);
```

TABLE 3    STEAL_BUFFER

```
STEAL_BUFFER:
   Obtain buffer pool LRU latch
   DO UNTIL a useable buffer is found QR LRU chain
     is empty
     IF sequential request
      AND sufficient buffers exist on SLRU chain THEN
        Select SLRU chain
      ELSE
        Select LRU chain
      IF 1st buffer on selected chain is on SLRU THEN
        DO
          Dequeue buffer from SLRU
          Lower count of buffers on SLRU
        END
      ELSE;
      Dequeue buffer from LRU chain
      Attempt to steal just dequeued buffer
      IF stolen successfully THEN
        DO
          IF buffer marked for deletion
           AND not a "must complete" request THEN
             Inset buffer into local deleted buffer chain
          ELSE (this is a buffer we can use)
             DO
                Indicate buffer obtained
                Increment dependency count
             END
        END
      ELSE;
   END (DO UNTIL)
   Free the buffer pool LRU latch
   Return
   END (STEAL_BUFFER);
```

TABLE 4    INDICATE_STATUS

```
INDICATE_STATUS:
   IF buffer dependency count just raised from 0 to 1 THEN
     DO
       IF request is for sequential page processing THEN
         WBSEQ = ON
       ELSE
         WBSEQ = OFF
     END
   ELSE
     IF request is not for sequential page processing THEN
       WBSEQ = OFF
     ELSE;
   Return
END;
```

```
TABLE 5    PREFETCH_DRIVER

1300  PREFETCH_DRIVER:
1310     Indicate get-range request to get page
1320     Call GET_PAGE to obtain buffers for pages (N+1) to
1330     (N+1+prefetch_quantity)
1340     Read pages into buffers where required
1350     Call RELEASE_PAGE for each buffer obtained
1360  END;
```

```
TABLE 6    RELEASE_PAGE

1400  RELEASE_PAGE
1410     Lower dependency count by one
1420     IF dependency count = 0 THEN
1430        DO
1440           Get LRU latch
1450           IF buffer on LRU chain THEN
1460              DO
1470                 If buffer on SLRU chain THEN
1480                    . DO
1490                       Dequeue buffer from SLRU
1500                       Lower SLRU buffer count by one
1510                    END
1520                 ELSE;
1530                 Dequeue buffer from LRU chain
1540              END
1550           ELSE;
1560           Insert buffer to tail of LRU chain
1570           IF buffer used only sequentially
1580            AND caller is not PREFETCH_DRIVER THEN
1590              Insert buffer to tail of SLRU chain
1600           ELSE;
1610           Free LRU latch
1620        END;
1620     ELSE;
1630  END;
```

## Claims

1. A method for operating a computing apparatus including a main processor (10), a plurality of main storage buffers (14), and at least one external storage device (30); the main processor being operated under control of a data base system which includes a buffer manager (20) for allocating data set pages read from the storage device into the buffers for concurrent access by both sequential and random processes; the method being characterized by the steps of:

(1) establishing a queue value;

(2) maintaining a normal least recently used (LRU) buffer chain (34) and a sequential LRU buffer chain (36) with the sequential LRU buffer chain replicated on the normal LRU buffer chain;

(3) placing buffers (14) released from a sequential process (16) that is not a prefetch process in both LRU buffer chains, and placing buffers released from a random process (18) or from a sequential prefetch process only in the normal LRU buffer chain; and

(4) responsive to a request for a buffer from a sequential process (16), stealing the head buffer from the sequential LRU buffer chain (36) provided the number of buffers in that chain exceeds the queue value, otherwise stealing the head buffer from the normal LRU chain (34), thereby preventing recursive steals of buffers employed in nested sequential processes.

2. The method of claim 1, further characterized by conditionally asynchronously prefetching data set pages from the external storage device (30) in response to a request for a data set page which is an integral multiple of a process defined prefetch quantity.

3. The method of claims 1 and 2 for preventing monopolization of a buffer pool by sequential processes sharing the buffer pool concurrently with random processes.

4. A computing apparatus including a main processor (10), a plurality of main storage buffers (14), and at least one external storage device (30); the main processor being operable under control of a data base system which includes a buffer manager (20) for allocating data set pages read from the storage device into the buffers from concurrent access by both sequential and random processes; characterized by means for operating the processor to

(1) establish a queue value;

(2) maintain a normal least recently used (LRU) buffer chain (34) and a sequential LRU buffer chain (36) with the sequential LRU buffer chain replicated on the normal LRU buffer chain;

(3) place buffers (14) released from a sequential process (16) that is not a prefetch process in both LRU buffer chains (34, 36), and place buffers released from a random process (18) or from a sequential prefetch process only in the normal LRU buffer chain: (34); and

(4) responsive to a request for buffer for a sequential process (16), steal the head buffer from the sequential LRU buffer chain (36) provided the number of buffers in that chain exceeds the queue value, otherwise steal the head buffer from the normal LRU chain (34), thereby preventing recursive steals of buffers employed in nested sequential processes.

5. The apparatus of claim 4 further characterized by means for conditionally asynchronously prefetching data set pages from the external storage device (30) in response to a request for a data set page which is an integral multiple of a process defined prefetch quantity.


**Patentansprüche**

1. Verfahren zum Betreiben eines Computers, mit einem Hauptprozessor (10), einer Vielzahl von Hauptspeicherpuffern (14), und mit mindestens einem externen Speicher (30), wobei der Hauptprozessor durch ein Datenbanksystem gesteuert wird, welches einen Puffervarwalter (20) zum Zuordnen von Datensatzseiten, welche vom Speicher in die Puffer gelesen werden, zum gleichzeitigen Zugriff durch sequentielle und wahlfreie Verarbeitung, gekennzeichnet durch folgende Schritte:

(1) Festsetzen eines Warteschlangenwertes;

(2) Unterhalten einer normalen, am längsten nicht benutzten (LRU) Pufferkette (34) und einer sequentiellen LRU-Pufferkette (36), wobei die sequentielle LRU-Pufferkette auf der normalen LRU-Pufferkette wiederholt wird;

(3) Einsetzen von Puffern (14), welche von einem sequentiellen Vorgang (16), der kein Vorausilesevorgang ist, freigegeben worden sind, in beide LRU-Pufferketten und Einsetzen von Puffern, welche von einem wahlfreien Vorgang (18) bzw. von einem sequentiellen Vorausilesevorgang friegegeben worden sind, nur in die normale LRU-Pufferkette; und

(4) — als Reaktion auf eine Anfrage nach einem Puffer von einem sequentiellen Vorgang (16) — Wegnahme des Kopfupuffers von der sequentiellen LRU-Pufferkette (36), vorausgesetzt, die Anzahl der Puffer in dieser Kette übersteigt den Warteschlangenwert, bzw. Wegnahme des Kopfpuffers von der normalen LRU-Kette (34), wodurch rekursive Wegnahmen von Puffern, welche in verschachtelten sequentiellen Vorgängen benutzt worden sind, verhindert werden.

2. Verfahren nach Anspruch 1, gekennzeichnet durch bedingtes asynchrones Vorauslesen von Datensatzseiten aus dem externen Speicher (10) als Reaktion auf eine Anfrage nach einer Datensatzseite, welche eine ganzzahlige Vielfache einer prozeß-definierten vorausgelesen Menge ist.

3. Verfahren nach Anspruch 1 oder 2 zum Vermeiden von Monopolsation eines Puffersystems durch sequentielle Prozesse bei gemeinsamer Benutzung des Puffersystems gleichzeitig mit wahlfreien Prozessen.

4. Computer, mit einem Hauptprozessor (10), einer Vielzahl von Hauptspeicherpuffern (14), und mit mindestens einem externen Speicher (30); wobei der Hauptprozessor durch ein Datenbanksystem gesteuert wird, welches einen Pufferverwalter (20) zum Zuordnen von Datensatzseiten, welche von Speicher in die Puffer gelesen werden, zum gleichzeitigen Zugriff durch sequentielle und wahlfreie Verarbeitung; gekennzeichnet durch Einrichtungen, mit denen der Prozessor

(1) einen Warteschlangenwert festsetzt;

(2) eine normale, am längsten nicht benutzte (LRU) Pufferkette (34) und eine sequentielle LRU-Pufferkette (36), unterhält, wobei die sequentielle LRU-Pufferkette auf der normalen LRU-Pufferkette wiederholt wird;

(3) Puffer (14) einsetzt, welche von einem sequentiellen Vorgang (16), der kein Vorausilesevorgang ist, freigegeben worden sind, in beide LRU-Pufferketten und Puffer einsetzt, welche von einem wahlfreien Vorgang (18) bzw. von einem sequentiellen Vorausilesevorgang freigegeben worden sind, nur in die normale LRU-Pufferkette; und

(4) — als Reaktion auf eine Anfrage nach einem Puffer von einem sequentiellen Vorgang (16) — den Kopfpuffers von der sequentiellen LRU-Pufferkette (36), wegnimmt, vorausgesetzt, die Anzahl der Puffer in dieser Kette übersteigt den Warteschlangenwert, bzw. den Kopfpuffers von der normalen LRU-Kette (34), wegnimmt, wodurch rekursive Wegnahmen von Puffern, welche in verschachtelten sequentiellen Vorgängen benutzt worden sind, verhindert werden.

5. System nach Anspruch 4, gekennzeichnet durch Einrichtungen zum bedingten asynchronen Vorauslesen von Datensatzseiten aud dem externen Speicher (10) als Reaktion auf eine anfrage nach einer Datenatzseite, welche eine, ganzzahlige Vielfache einer prozeß-definierten vorausgelesen Menge ist.

**Revendications**

1. Procédé de mise en oeuvre d'un appareil de calcul comprenant un processeur central (10), une pluralité de tampons de mémoire centrale (14), et au moins une mémoire extérieure (30); le processeur central étant mis en action sous la commande d'un système de base de donées qui comprend un gestionnaire de mémoires tampon (20) pour l'attribution de pages d'ensembles de données lues, à partir de la mémoire, dans les mémoires tampon pour accès simultané par des procédés tant séquentiels que sélectifs; le procédé étant caractérisé par les étapes suivantes:

(1) établir une valeur de file d'attente;

(2) maintenir un chaîne de mémoires tampon normale (34) utilisée le moins récemment (LRU) et une chaîne de tampon (36) LRU séquentielle, la chaîne de mémoires tampon LRU séquentielle étant reproduite sur la chaîne de mémoires tampon LRU normale;

(3) mettre en place des mémoires tampon (14) libérées d'un processus séquentiel (16) qui n'est pas un processus de préextraction, dans les deux chaîne de mémoires tampon LRU, et mettre en place les mémoires tampon libérées d'un processus sélectif (18) ou d'un processus séquentiel de préextraction uniquement dans la chaîne normale de mémoires tampon LRU; et

(4) en réponse à la demande d'une mémoire tampon émanant d'un processus séquentiel (16), soustraire la mémoire tampon de tête à la chaîne de mémoires tampon séquentielle LRU (36), à condition que le nombre de mémoires tampon dans cette chaîne dépasse la valeur de file d'attente, sinon soustraire la mémoire tampon de tête à la chaîne LRU normale (34), en empêchant de cette façon des soustractions récurrentes de mémoires tampon employées dans des processus séquentiels emboîtés.

2. Procédé de la revendication 1, caractérisé en outre par la préextraction, de façon conditionnelle et asynchrone, de pages, d'ensembles de données sorties de la mémoire extérieure (30) en réponse à la demande d'une page d'ensembles de données qui est un multiple entier d'une quantité de préextraction définie par le processus.

3. Procédé des revendications 1 et 2 pour empêcher la monopolisation d'un groupe de mémoires tampon par des processus séquentiels se partageant le groupe de mémoires tampon simultanément avec des processus sélectifs.

4. Appareil de calcul comprenant un processeur central (10), une pluralité de tampons de mémoire centrale (14) et au moins une mémoire extérieure (30); le processeur central pouvant être mis en action sous commande d'un système de base de données qui inclut un gestionnaire de mémoires tampon (20) pour l'attribution de pages d'ensembles de données lues à partir de la mémoire dans les mémoires tampon pour accès simultané par des procédés tant séquentiels que sélectifs; caractérisé par un moyen pour la mise en oeuvre du processeur en vue de

(1) établir une valeur de file d'attente;

(2) maintenir un chaîne de mémoires tampon normale (34) utilisée le moins récemment (LRU) et une chaîne de mémoires tampon séquentielle (36) LRU, la chaîne de mémoires tampon séquentielle LRU étant reproduite sur la chaîne de mémoires tampon normale LRU;

(3) mettre en place des mémoires tampon (14) libérées d'un processus séquentiel (16) qui n'est pas un processus de préextraction dans les deux chaînes (34, 36) de mémoires tampon LRU, et mettre en place les mémoires tampon libérées d'un processus sélectif (18) ou d'un processus séquentiel de préextraction uniquement dans la chaîne normale de mémoires tampon (34) LRU; et

(4) en réponse à une demande de mémoire tampon pour un processus séquentiel (16), soustraire la mémoire tampon de tête à la chaîne séquentielle de mémoires tampon LRU (36) à condition que le nombre de mémoires tampon dans cette chaîne dépasse la valeur de file d'attente, sinon soustraire la mémoire tampon de tête de la chaîne normale LRU (34), empêchant par ce moyen des soustractions récurrentes de mémoires tampon employées dans des processus séquentiels emboîtés.

5. Appareil de la revendication 4, caractérisé en outre par des moyens pour la préextraction, de façon conditionnelle et asynchrone, de pages d'ensembles de données à partir de la mémoire extérieure (30) en réponse à une demande de page d'ensembles de données qui est un multiple entier d'une quantité de préextraction définie par le processus.

FIG.1

WINDOW BLOCK 70

| | |
|---|---|
| 80 | RPN OF OCCUPANT |
| 71 | WB FLAGS |
| 81 | LATCH POINTER |
| 82 | HASH CHAIN FORWARD/BACKWARD POINTERS |
| 83 | DATA SET TOKEN OF OCCUPANT |
| 84 | STEAL FLAG |
| 85 | WINDOW DEPENDENCY COUNT |
| 72-75 | LRU/SLRU FORWARD/BACKWARD POINTERS |

FIG.3

WINDOW POOL HEADER BLOCK (WPH) 40

| | |
|---|---|
| 41 | EBQ ANCHOR |
| 42 | # BUFFERS ON SLRU |
| 43 | SLRU FORWARD ANCHOR |
| 44 | SLRU BACKWARD ANCHOR |
| 45 | LRU FORWARD ANCHOR |
| 46 | LRU BACKWARD ANCHOR |

EBQ 48

34
36

WINDOW BLOCK 50

| | |
|---|---|
| 51 | 100 WB FLAGS |
| 52 | SLRU NEXT |
| 53 | SLRU PREV |
| 54 | LRU NEXT |
| 55 | LRU PREV |

WINDOW BLOCK 60

| | |
|---|---|
| 61 | 111 WB FLAGS |
| 62 | SLRU NEXT |
| 63 | SLRU PREV |
| 64 | LRU NEXT |
| 65 | LRU PREV |

WINDOW BLOCK 70

| | |
|---|---|
| 71 | 111 WB FLAGS |
| 72 | SLRU NEXT |
| 73 | SLRU PREV |
| 74 | LRU NEXT |
| 75 | LRU PREV |

FIG.2

ON EBQ

STOLEN

A2

A3

S

A1

ACTIVE

I

INACTIVE

FIG.4